# EUROPEAN PATENT APPLICATION

(11) **EP 2 881 637 A1**
(43) Date of publication of application: **10.06.2015**
(21) Application number: 13826400.7
(22) Date of filing: 01.08.2013
(51) Int. Cl.: F16K 49/00, F16K 27/12, H01M 8/04

(54) **VALVE AND FUEL CELL SYSTEM EMPLOYING VALVE**

(30) Priority: 02.08.2012 JP 2012172145
(71) Applicant: Nissan Motor Co., Ltd, Yokohama-shi, Kanagawa 221-0023 (JP); Mikuni Corporation, Tokyo 101-0021 (JP)
(72) Inventor: NAKAMURA, Kenji, Atsugi-shi Kanagawa 243-0123 (JP); SHIBATA, Kazutaka, Odawara-shi Kanagawa 250-0055 (JP)
(74) Representative: Grünecker Patent- und Rechtsanwälte PartG mbB
(86) International application number: PCT/JP2013/070899
(87) International publication number: WO 2014/021429

(57) **Abstract**

Disclosed is a valve comprising a passage portion where a wet fluid flows, a valve body provided inside the passage portion, and a cover body that covers an outer circumferential surface of the passage portion so as to form a heating medium passage where a heating medium for warming an outer circumferential surface of the passage portion flows, wherein the cover body of the valve has an inlet port and an outlet port for the heating medium in its upper side and forms the heating medium passage such that the heating medium flows via a lower side of the passage portion.

## Description

### TECHNICAL FIELD

This invention relates to a valve and a fuel cell system in which the valve is used.

### BACKGROUND ART

In JP 2011-003403 A, as a fuel cell system of the prior art, a fuel cell system having a cathode pressure control valve (air pressure control valve) in a cathode gas discharge passage is discussed.

### SUMMARY OF INVENTION

A wet fluid containing water vapor is discharged to a cathode gas discharge passage. For this reason, under a low-temperature environment having an ambient temperature lower than 0°C, a cathode pressure control valve provided in the cathode gas discharge passage can be frozen and adhere disadvantageously.

This invention has been made in view of such a problem to suppress a valve body from adhering due to a freeze.

According to an aspect of this invention, there is provided a valve comprising a passage portion where a wet fluid flows, a valve body provided inside the passage portion, and a cover body that covers an outer circumferential surface of the passage portion so as to form a heating medium passage where a heating medium for warming an outer circumferential surface of the passage portion flows, wherein the cover body of the valve has an inlet port and an outlet port for the heating medium in its upper side and forms the heating medium passage such that the heating medium flows via a lower side of the passage portion.

### BRIEF DESCRIPTION OF DRAWINGS

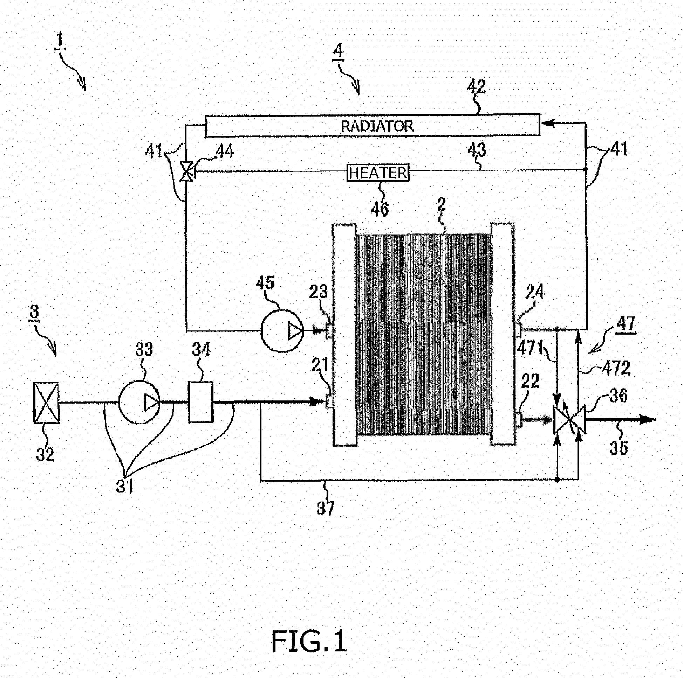

FIG. 1 is a schematic configuration diagram illustrating a fuel cell system according to an embodiment of this invention.
FIG. 2 is a perspective view illustrating a cathode pressure control valve according to an embodiment of this invention.
FIG. 3 is a plan view illustrating a cathode pressure control valve according to an embodiment of this invention.
FIG. 4 is a bottom view illustrating a cathode pressure control valve according to an embodiment of this invention.
FIG. 5 is a cross-sectional view taken along a line V-V of the cathode pressure control valve of FIG. 3.

### DESCRIPTION OF EMBODIMENTS

Hereinafter, an embodiment of this invention is described with reference to the accompanying drawings.

A fuel cell having an electrolytic membrane interposed between an anode (fuel electrode) and a cathode (oxidant electrode) generates electricity by supplying an anode gas (fuel gas) containing hydrogen to the anode and a cathode gas (oxidant gas) containing oxygen to the cathode. Electrode reactions generated in both the anode and the cathode are expressed as follows.

anode : 2H₂ → 4H⁺ + 4e- (1)

cathode : 4H⁺ + 4e⁻ + O₂ → 2H₂O (2)

Through the electrode reactions (1) and (2), the fuel cell generates an electromotive force of approximately 1 V.

In order to use such a fuel cell as a power source of a vehicle, a fuel cell stack obtained by stacking several hundreds of fuel cells is employed because high electric power is necessary. In addition, a fuel cell system is provided to supply an anode gas and a cathode gas to the fuel cell stack to extract electric power for driving a vehicle.

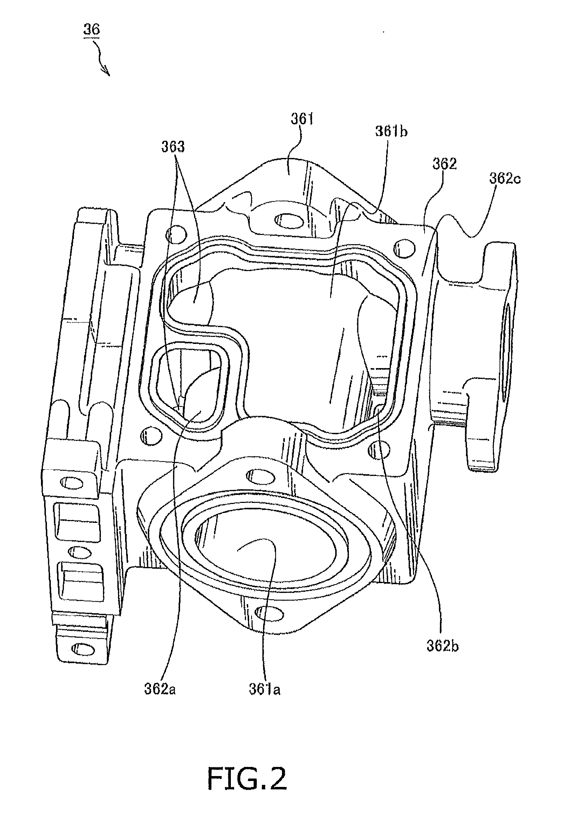

FIG. 2 is a schematic configuration diagram illustrating a fuel cell system 1 according to an embodiment of this invention.

The fuel cell system 1 comprises a fuel cell stack 2, a cathode gas supply/ discharge unit 3, and a stack cooling unit 4.

The fuel cell stack 2 is obtained by stacking a plurality of fuel cells. The fuel cell stack 2 is supplied with an anode gas and a cathode gas to generate electric power necessary to drive a vehicle (for example, electric power necessary to drive a motor).

The anode gas supply/discharge unit for supplying the fuel cell stack 2 with the anode gas is not a main part of this invention and is not illustrated in the drawings intentionally for simplicity purposes. As a method of supplying the anode gas, various methods may be employed. For example, an anode off-gas discharged from the fuel cell stack 2 to the anode gas discharge passage may be recovered to an anode gas supply passage using a pump or the like to supply the anode off-gas to the fuel cell stack 2 again for reuse. Alternatively, the anode off-gas discharged from the fuel cell stack 2 may be temporarily accumulated in a buffer tank or the like to backwardly flow it from the buffer tank to the fuel cells for reuse.

The cathode gas supply/discharge unit 3 comprises a cathode gas supply passage 31, a filter 32, a cathode compressor 33, an after-cooler 34, a cathode gas discharge passage 35, a cathode pressure control valve 36, and a shaft purge passage 37.

The cathode gas supply passage 31 is a passage where the cathode gas supplied to the fuel cell stack 2 flows. One end of the cathode gas supply passage 31 is connected to the filter 32, and the other end is connected to a cathode gas inlet hole 21 of the fuel cell stack 2.

The filter 32 is used to remove a foreign object from the cathode gas input to the cathode gas supply passage 31.

The cathode compressor 33 is provided in the cathode gas supply passage 31. The cathode compressor 33 inputs the air (atmospheric air) as a cathode gas to the cathode gas supply passage 31 through the filter 32 and supplies the cathode gas to the fuel cell stack 2.

The after-cooler 34 is provided in the cathode gas supply passage 31 in the downstream of the cathode compressor 33. The after-cooler 34 cools the cathode gas discharged from the cathode compressor 33.

The cathode gas discharge passage 35 is a passage where the cathode off-gas discharged from the fuel cell stack 2 flows. The cathode off-gas is a mixed gas (wet gas) produced by mixing the cathode gas and water vapor produced from the electrode reactions. One end of the cathode gas discharge passage 35 is connected to a cathode gas outlet hole 22 of the fuel cell stack 2, and the other end is opened.

The cathode pressure control valve 36 is provided in the cathode gas discharge passage 35. The cathode pressure control valve 36 is an electromagnetic valve capable of controlling an opening level in a continuous or stepwise manner, and the opening level is controlled by a controller (not illustrated). A specific configuration of the cathode pressure control valve 36 is described below with reference to FIGS. 2 to 5.

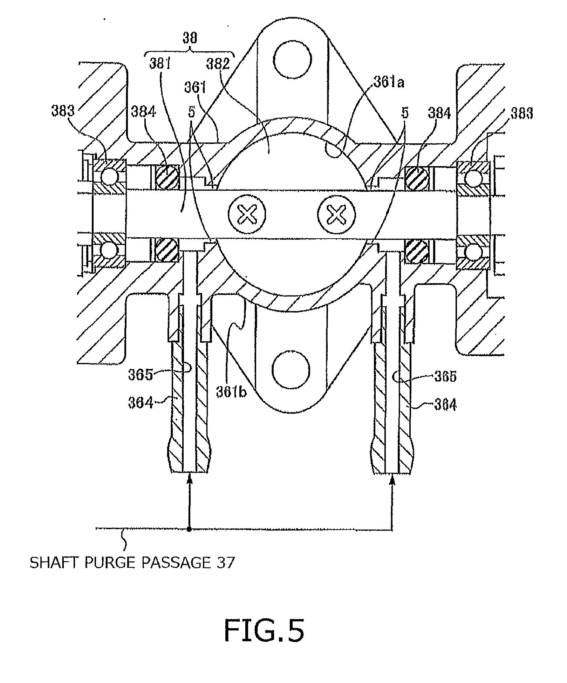

The shaft purge passage 37 is a passage diverted from the cathode gas supply passage 31 in the downstream of the after-cooler 34 and connected to an internal purge passage 365 of the cathode pressure control valve 36 (refer to FIG. 5). The shaft purge passage 37 is a passage where the cathode gas as a dry gas is supplied to the internal purge passage 365 of the cathode pressure control valve 36.

The stack cooling unit 4 comprises a coolant circulation passage 41, a radiator 42, a coolant bypass passage 43, a three-way valve 44, a circulation pump 45, a PTC heater 46, and a cathode pressure control valve circulation passage 47.

The coolant circulation passage 41 is a passage where a coolant for cooling the fuel cell stack 2 circulates. One end of the coolant circulation passage 41 is connected to a coolant inlet hole 23, and the other end is connected to a coolant outlet hole 24 of the fuel cell stack 2. In the following description, the coolant outlet hole 24 side of the coolant circulation passage 41 is referred to as a upstream side, and the coolant inlet hole 23 side is be referred to as a downstream side.

The radiator 42 is provided in the coolant circulation passage 41. The radiator 42 cools the coolant discharged from the fuel cell stack 2.

One end of the coolant bypass passage 43 is connected to the coolant circulation passage 41, and the other end is connected to the three-way valve 44 so that the coolant can circulate while bypassing the radiator 42.

The three-way valve 44 is provided in the coolant circulation passage 41 in the downstream side from the radiator 42. The three-way valve 44 changes a circulation passage of the coolant depending on a temperature of the coolant. Specifically, when the temperature of the coolant is relatively high, the three-way valve 44 changes the circulation passage of the coolant such that the coolant discharged from the fuel cell stack 2 is supplied to the fuel cell stack 2 again through the radiator 42. In comparison, when the temperature of the coolant is relatively low, the three-way valve 44 changes the circulation passage of the coolant such that the coolant discharged from the fuel cell stack 2 flows through the coolant bypass passage 43 without passing through the radiator 42 and is supplied to the fuel cell stack 2 again.

The circulation pump 45 is provided in the coolant circulation passage 41 in the downstream side from the three-way valve 44 and circulates the coolant.

The PTC heater 46 is provided in the coolant bypass passage 43. The PTC heater 46 is activated during warming-up of the fuel cell stack 2 and the like to increase a temperature of the coolant.

The cathode pressure control valve circulation passage 47 is a passage for guiding the coolant to a water jacket 363 (refer to FIGS. 2 to 4) formed inside the cathode pressure control valve 36 in order to prevent adherence in the cathode pressure control valve 36 caused by a freeze. The cathode pressure control valve circulation passage 47 comprises an inlet passage 471 diverted from the coolant circulation passage 41 in the vicinity of the coolant outlet hole 24 of the fuel cell stack 2 to guide the coolant to the water jacket 363 of the cathode pressure control valve 36, and a recovery passage 472 that recovers the coolant discharged from the water jacket 363 of the cathode pressure control valve 36 to the coolant circulation passage 41 in the vicinity of the coolant outlet hole 24 of the fuel cell stack 2 again.

Here, when the fuel cell system 1 is mounted on a vehicle as in this embodiment, it is necessary to reliably and early start the fuel cell system 1 even under a low-temperature environment having an ambient temperature lower than 0°C.

If the fuel cell stack 2, the cathode gas discharge passage 35, or the cathode pressure control valve 36 is left as it is without drying after the fuel cell system 1 stops, water produced through the electrode reactions during electricity generation (hereinafter, referred to as "produced water") may be frozen inside the fuel cell stack 2 or the cathode pressure control valve 36 under a low temperature environment. In this regard, according to this embodiment, in a preparation for the next sub-zero temperature start after the fuel cell system 1 stops, an after-stop drying operation is performed, in which internal moisture of the fuel cell stack 2 or the cathode pressure control valve 36 is discharged to the outside of the system by driving the cathode compressor 33.

For this reason, the inside of the fuel cell stack 2 or the cathode pressure control valve 36 basically has a dry condition when the fuel cell system 1 starts.

However, the produced water is produced due to the electrode reactions during electricity generation after the fuel cell system 1 starts. In addition, the internal temperature of the fuel cell stack 2 gradually increases from the ambient temperature due to the heat generated from the electrode reaction.

Therefore, when the internal temperature of the fuel cell stack 2 becomes 0°C or higher as a certain time elapses from the start of the fuel cell system 1, the produced water slowly liquefied inside the fuel cell stack 2 flows to the cathode gas discharge passage 35.

If the internal temperature of the cathode pressure control valve 36 is lower than 0°C at this moment, the produced water which has flowed to the cathode gas discharge passage 35 may be frozen inside the cathode pressure control valve 36, so that it may be adhered to the cathode pressure control valve 36 or hinder the open/close operation of the cathode pressure control valve 36.

In this regard, according to this embodiment, a water jacket 363 is formed inside the cathode pressure control valve 36, and a coolant circulates in the water jacket in order to make the internal temperature of the cathode pressure control valve 36 equal to or higher than 0°C before the produced water which has flowed to the cathode gas discharge passage 35 after the start of the fuel cell system 1 reaches the cathode pressure control valve 36.

Hereinafter, a specific configuration of the cathode pressure control valve 36 according to this embodiment is described with reference to FIGS. 2 to 5.

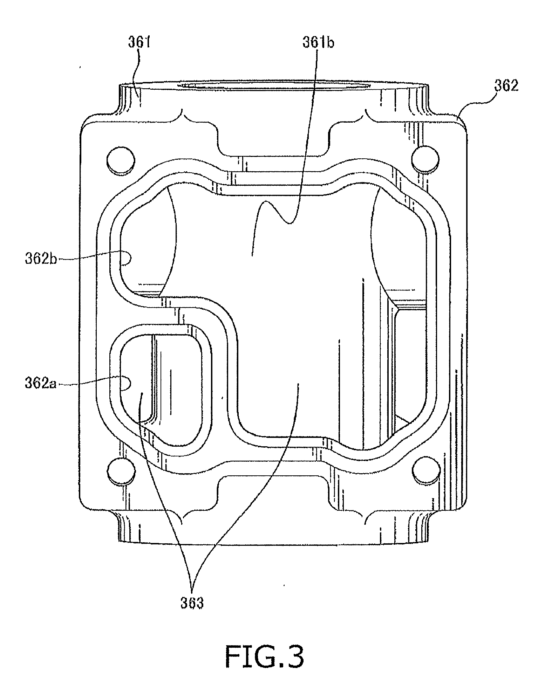

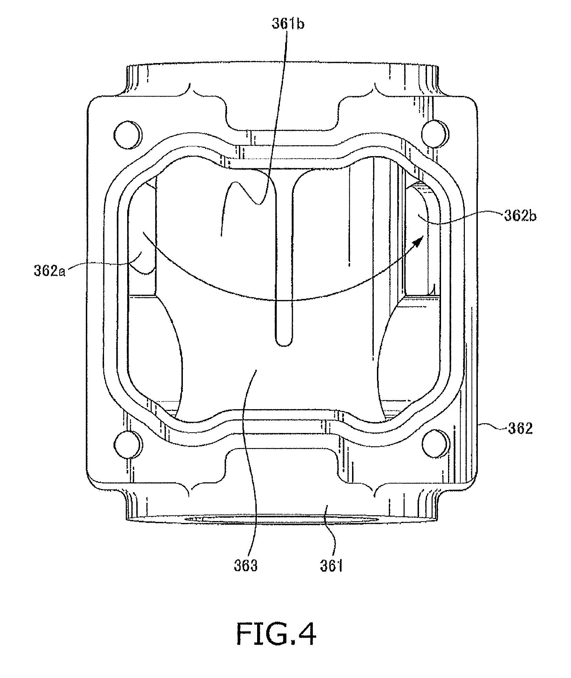

FIG. 2 is a perspective view illustrating the cathode pressure control valve 36 according to this embodiment. FIG. 3 is a plan view illustrating the cathode pressure control valve 36 according to this embodiment. FIG. 4 is a bottom view illustrating the cathode pressure control valve 36 according to this embodiment.

As illustrated in FIGS. 2 to 4, the cathode pressure control valve 36 comprises a main body 361 and a body cover 362.

The main body 361 is a cylindrical passage having both ends opened. The cathode off-gas that is discharged from the fuel cell stack 2 and flows through the cathode gas discharge passage 35 is input from one of the open ends of the main body 361 (upper sides of FIGS. 2 and 3 or lower side of FIG. 4) to the internal passage 361a of the main body 361. In addition, the cathode off-gas which has flowed to the internal passage 361a of the main body 361 is output from the other open end of the main body 361 (lower sides of FIGS. 2 and 3 or upper side of FIG. 4) to the cathode gas discharge passage 35.

The body cover 362 covers the entire outer circumferential surface 361b of the main body 361 so as to form a water jacket 363 for flowing the coolant with the outer circumferential surface 361b of the main body 361. The body cover 362 is formed integratedly with the main body 361.

The body cover 362 comprises a coolant inlet port 362a and a coolant outlet port 362b on a surface 362c corresponding to an upper side in a gravity direction (hereinafter, referred to as an "upper surface") when the cathode pressure control valve 36 is installed in the cathode gas discharge passage 35.

The coolant inlet port 362a is an inlet for introducing the coolant to the inside of the water jacket 363 and is connected to the inlet passage 471 described above. The coolant inlet port 362a is formed in the other open end side of the main body 361, that is, the open end side corresponding to the downstream side of the internal passage 361a. The coolant inlet port 362a is formed to have an opening area smaller than that of the coolant outlet port 362b.

The coolant outlet port 362b is an outlet for discharging the coolant introduced into the inside of the water jacket 363 and is connected to the recovery passage 472 described above. The coolant outlet port 362b is formed on nearly the entire upper surface 362c of the body cover 362 except for the area for forming the coolant inlet port 362a.

The coolant introduced into the water jacket 363 from the coolant inlet port 362a formed on the upper surface 362c of the body cover 362 flows in a circumferential direction of the outer circumferential surface 361 b of the main body 361 as indicated by the arrow of FIG. 4 and is discharged from the coolant outlet port 362b formed on the upper surface 362c of the body cover 362. That is, the coolant introduced from the coolant inlet port 362a to the water jacket 363 flows in a circumferential direction of the main body 361 in the left side of the drawing toward the lower side of the gravity direction and then flows through the lower side of the main body 361 in a circumferential direction. Then, the coolant flows in a circumferential direction of the main body 361 in the right side of the drawing toward the upper side of the gravity direction and is discharged from the coolant outlet port 362b.

As a result, the coolant can warm the lower side of the main body 361 where the produced water is easily accumulated inside the main body 361. Therefore, it is possible to suppress a freeze of the produced water inside the main body 361.

FIG. 5 is a cross-sectional view taken along a line V-V of the cathode pressure control valve 36 of FIG. 3.

As illustrated in FIG. 5, a butterfly valve 38 is installed inside the main body 361. The butterfly valve 38 comprises a shaft 381 and a valve body 382.

The shaft 381 is supported to the main body 361 via a pair of bearings 383 installed in the left and right sides of the main body 361 rotatably .

The valve body 382 has a disk shape having a diameter approximately equal to that of the internal passage 361a of the main body 361 and is installed in the shaft 381 so as to be positioned in the internal passage 361a of the main body 361. The valve body 382 is rotated synchronously with the shaft 381. As a result, a flow rate of the cathode off-gas flowing through the internal passage 361a of the main body 361 is controlled, and a pressure of the cathode gas supplied to the fuel cell stack 2 is controlled.

Here, as illustrated in FIG. 5, a minute gap 5 is formed between the main body 361 and the shaft 381 for rotation of the shaft 381. If the produced water intrudes into this gap 5 during the operation of the fuel cell system 1, it is difficult to remove the produced water which has intruded into this gap 5 even if the after-stop drying operation described above is performed. If the produced water which has intruded into the gap 5 between the main body 361 and the shaft 381 is frozen, the shaft 381 may not be rotated, and the valve body 382 may adhere.

In this regard, according to this embodiment, a pair of bulges 364 protruding downward from the outer circumferential surface 361 b in the lower side of the main body 361 are provided in the main body 361, and an internal purge passage 365 communicating with the gap 5 between the main body 361 and the shaft 381 is formed inside the bulge 364. The internal purge passage 365 is connected to the shaft purge passage 37 to transfer the cathode gas. As a result, the cathode gas flowing through the shaft purge passage 37 is introduced into the internal passage 361a of the main body 361 from the gap 5 between the main body 361 and the shaft 381 through the internal purge passage 365. Therefore, it is possible to suppress the produced water from flowing into the gap 5 between the main body 361 and the shaft 381.

A space from the gap 5 between the main body 361 and the shaft 381 to the bearing 383 is sealed by an O-ring 384.

As described above, the cathode pressure control valve 36 according to this embodiment comprises the main body 361 where the cathode off-gas (wet fluid) flows, a valve body 382 provided inside the main body 361, and the body cover 362 that covers the outer circumferential surface 361 b of the main body 361 so as to form the water jacket 363 where the coolant (heating medium) for warming the outer circumferential surface 361 b of the main body 361 flows. In addition, the body cover 362 has the coolant inlet port 362a and the coolant outlet port 362b on its upper surface 362c corresponding to the upper side in the gravity direction to form the water jacket 363 for allowing the coolant to flow via the lower side of the body cover 362 in the gravity direction.

As a result, the coolant introduced into the water jacket 363 from the coolant inlet port 362a flows through the lower side in the gravity direction along the outer circumferential surface 361 b of the main body 361 and then flows through the upper side of the gravity direction along the outer circumferential surface 361b of the main body 361 so as to be discharged from the coolant outlet port 362b. For this reason, it is possible to warm the entire outer circumferential surface 361 b of the main body 361 using the coolant. Therefore, it is possible to suppress the valve body 382 provided inside the main body 361 from an adhesion due to a freeze.

In particular, when the butterfly valve 38 that opens/closes the internal passage 361a inside the main body 361 by rotating the shaft 381 is installed inside the main body 361, an outer edge portion of the valve body 382 of the butterfly valve 38 nearly adjoins the internal passage 361a of the main body 361. Therefore, it is possible to effectively suppress a freeze of the produced water between the outer edge portion of the valve body 382 and the internal passage 361a of the main body 361 and adherence of the valve body 382 by warming the entire outer circumferential surface 361b of the main body 361 using the coolant.

It is possible to reliably warm the lower side of the internal passage 361a where the produced water is particularly easily accumulated inside the main body 361 by warming the entire outer circumferential surface 361b of the main body 361 using the coolant. Therefore, it is possible to suppress icing formed from a freeze of produced water from interfering with the open/close operation of the valve body 382.

It is possible to suppress the air mixed into the coolant from being accumulated inside the water jacket 363 by forming the coolant outlet port 362b on the upper surface 362c of the body cover 362. As a result, it is possible to effectively warm the main body 361 using the coolant. This is because it is difficult to warm the main body 361 using the coolant if the air is accumulated inside the water jacket 363 and serves as hindrance.

Since both the coolant inlet port 362a and the coolant outlet port 362b are formed on the same surface of the body cover 362, that is, on the upper surface 362c, it is possible to facilitate a layout for connecting the inlet passage 471 for guiding the coolant to the coolant inlet port 362a and the recovery passage 472 where the coolant discharged from the coolant outlet port 362b flows. In other words, if the coolant inlet port 362a and the coolant outlet port 362b are formed on different surfaces of the body cover 362, a layout for connecting the inlet passage 471 and the recovery passage 472 becomes complicated.

The coolant introduced into the water jacket 363 from the coolant inlet port 362a is the coolant discharged from the fuel cell stack 2, and its temperature can be regarded as being equal to the internal temperature of the fuel cell stack 2. Therefore, when the produced water flowing to the cathode gas discharge passage 35 after the start of the fuel cell system 1 reaches the cathode pressure control valve 36, it is possible to increase the internal temperature of the cathode pressure control valve 36 up to the internal temperature of the fuel cell stack 2 (at least 0°C or higher). Therefore, it is possible to suppress the produced water flowing to the cathode gas discharge passage 35 after the start of the fuel cell system 1 from being frozen inside the cathode pressure control valve 36 (inside the main body 361).

In the cathode pressure control valve 36 according to this embodiment, the opening area of the coolant inlet port 362a is smaller than that of the coolant outlet port 362b.

As described above, the produced water is particularly easily accumulated in the lower side of the internal passage 361a inside the main body 361. If the opening area of the coolant inlet port 362a is large, heat exchange with the main body 361 in the vicinity of the coolant inlet port 362a is actively performed, so that the heat amount of the coolant is relatively reduced when the coolant reaches the outer circumferential surface 361b in the lower side of the main body 361. In comparison, by relatively reducing the opening area of the coolant inlet port 362a, it is possible to reduce the heat exchange amount with the main body 361 in the vicinity of the coolant inlet port 362a and warm the outer circumferential surface 361b in the lower side of the main body 361 using a relatively hot coolant. Therefore, it is possible to more reliably suppress the produced water from being frozen inside the main body 361.

In the cathode pressure control valve 36 according to this embodiment, the coolant inlet port 362a is formed on the upper surface 362c of the body cover 362 in the downstream side of the flow direction of the cathode off-gas flowing through the inside of the main body 361 (internal passage 361a).

In the downstream side of the internal passage 361a (in the discharge side of the cathode off-gas inside the main body 361), a pressure of the cathode off-gas flowing through the internal passage 361a is lower than that of the upstream side due to a pressure loss. For this reason, a freeze of the produced water is easily generated in the downstream side relative to the upstream side of the internal passage 361a. Therefore, it is possible to actively warm the downstream side of the internal passage 361a using a hot coolant by providing the coolant inlet port 362a in the downstream side of the internal passage 361a. Accordingly, it is possible to more reliably suppress a freeze of the produced water.

The cathode pressure control valve 36 according to this embodiment comprises the bulge 364 protruding downward from the lower side of the main body 361 and the internal purge passage 365 that is formed inside the bulge 364, communicates with the gap 5 between the main body 361 and the shaft 381, and is supplied with the cathode gas (dry fluid). In this manner, since the internal purge passage 365 is formed such that the shaft purge passage 37 is connected from the side opposite to the upper surface 362c of the body cover 362 where the inlet passage 471 or the recovery passage 472 is connected, that is, from the lower side of the main body 361, it is possible to reduce a size of the main body 361 and further a size of the cathode pressure control valve 36 in comparison with a case where all of the inlet passage 471, the recovery passage 472, and the shaft purge passage 37 are connected from the same surface. In addition, it is possible to improve a layout freedom.

Although embodiments of this invention have been described hereinbefore, such embodiments are just for illustrative purposes for embodying this invention, and they are not intended to limit the spirit and scope of this invention to specific configurations of the embodiments.

This application is based on and claims priority to Japanese Patent Application No. 2012-172145, filed in Japan Patent Office on August 2, 2012, the entire content of which is incorporated herein by reference.

## Claims

1. A valve comprising
a passage portion where a wet fluid flows,
a valve body provided inside the passage portion, and
a cover body that covers an outer circumferential surface of the passage portion so as to form a heating medium passage where a heating medium for warming an outer circumferential surface of the passage portion flows,
wherein the cover body has an inlet port and an outlet port for the heating medium in its upper side and forms the heating medium passage such that the heating medium flows via a lower side of the passage portion.

2. The valve according to claim 1, wherein an opening area of the inlet port is smaller than that of the outlet port.

3. The valve according to claim 1 or 2, wherein the inlet port is provided in the upper side of the cover body in a downstream side of a flow direction of a wet fluid flowing through the passage portion.

4. The valve according to any one of claims 1 to 3, wherein the valve body is installed in a rotation shaft that penetrates through the passage portion in a direction perpendicular to an axial direction of the passage portion, and the passage portion is opened or closed by rotating the rotation shaft.

5. The valve according to any one of claims 1 to 4, further comprising
a bulge protruding downward from a lower side of the passage portion, and
an internal purge passage that is formed inside the bulge, communicates with a gap between the passage portion and the rotation shaft, and is supplied with a dry fluid.

6. A fuel cell system in which the valve according to any one of claims 1 to 5 is used, comprising
a fuel cell supplied with an anode gas and a cathode gas to generate electricity,
a coolant circulation passage where a coolant for cooling the fuel cell circulates, and
a cathode gas discharge passage where a cathode off-gas discharged from the fuel cell flows,
wherein the valve is a pressure control valve provided in the cathode gas discharge passage in order to control a pressure of the cathode gas supplied to the fuel cell, and
the heating medium is a coolant diverted from the coolant circulation passage and introduced from the inlet port.

7. A fuel cell system in which the valve according to claim 5 is used, comprising
a fuel cell supplied with an anode gas and a cathode gas to generate electricity,
a coolant circulation passage where a coolant for cooling the fuel cell circulates,
a cathode gas supply passage where a cathode gas supplied to the fuel cell flows, and
a cathode gas discharge passage where a cathode off-gas discharged from the fuel cell flows,
wherein the valve is a pressure control valve provided in the cathode gas discharge passage in order to control a pressure of the cathode gas supplied to the fuel cell,
the heating medium is a coolant diverted from the coolant circulation passage and introduced from the inlet port, and
the dry fluid is a cathode gas diverted from the cathode gas supply passage and introduced from the internal purge passage.
